(19) Europäisches Patentamt
European Patent Office
Office européen des brevets

(11) Veröffentlichungsnummer: **0 199 326 B1**

(12) **EUROPÄISCHE PATENTSCHRIFT**

(45) Veröffentlichungstag der Patentschrift: **23.10.91**

(51) Int. Cl.⁵: **H04B 17/02**

(21) Anmeldenummer: **86105490.6**

(22) Anmeldetag: **21.04.86**

(54) Betriebsüberwachung von digitalen Übertragungsstrecken.

(30) Priorität: **22.04.85 DE 3514511**

(43) Veröffentlichungstag der Anmeldung:
**29.10.86 Patentblatt 86/44**

(45) Bekanntmachung des Hinweises auf die
Patenterteilung:
**23.10.91 Patentblatt 91/43**

(84) Benannte Vertragsstaaten:
**AT BE CH DE FR GB IT LI NL**

(56) Entgegenhaltungen:
**EP-A- 0 106 985**

**IEEE INTERNATIONAL CONFERENCE ON
COMMUNICATIONS, ICC '84, Amsterdam,
14.-17. Mai 1984, Band 2, Seiten 790-795,
IEEE, New York, US; A. STEVENSON et al.: "A
280Mbit/s monomode optical trunk transmission system"**

(73) Patentinhaber: **SIEMENS AKTIENGESELL-
SCHAFT
Wittelsbacherplatz 2
W-8000 München 2(DE)**

(72) Erfinder: **Steiner, Erhard, Dr. Dipl.-Ing.
Flurstrasse 1
W-8031 Eichenau(DE)**
Erfinder: **Vollnhals, Friedemann, Dipl.-Ing.
Mühlpointweg 10
W-8190 Wolfratshausen(DE)**

Rank Xerox (UK) Business Services

## Beschreibung

Die Erfindung betrifft ein Verfahren zur Betriebsüberwachung entsprechend dem Oberbegriff des Patentanspruchs 1.

Ein Verfahren der genannten Art ist aus der DE-A- 32 32 681 bekannt. Bei dem bekannten Verfahren wird zur Betriebsüberwachung von digitalen Übertragungsstrecken über die für das digitale Nutzsignal vorgesehene Übertragungseinrichtung ein frequenzversetztes Telemetriesignal vergleichsweise sehr niedriger Übertragungsgeschwindigkeit mit übertragen. Das Telemetriesignal besteht aus einzelnen Telegrammen, die in jedem Zwischenregenerator getrennt von den digitalen Signalen in dafür vorgesehenen Telemetrieeinheiten regeneriert und durch das Telegramm dieses Zwischengenerators ergänzt werden. Die Telegramme sind so aufgebaut, daß sich im Anschluß an ein erstes und ein zweites Kopfkennwort der eigentliche Datenteil anschließt und das Telegramm durch eine Endekennwort abgeschlossen wird. Der Datenteil selbst besteht aus mehreren Datenblöcken, die Informationen über die Bitfehlerrate im jeweiligen Zwischenregenerator sowie Information über die Eigenüberwachung des Zwischenregenerators enthalten

Auch aus der DE-A- 30 27 755 ist ein Verfahren zur Betriebsüberwachung digitaler Übertragungsstrecken bekannt, das ein adressenloses Telemetrievefahren beinhaltet. Bei diesen bekannten Verfahren ist ebenfalls in jedem Zwischenregenerator eine Telemetrieeinheit vorgesehen, die einen Telemetriesignalregenerator und einen Telemetriesignalsender enthält.

Die Auskopplung und die Einspeisung der Überwachungssignale zur und von der Telemetrieeinheit in den Übertragungsweg des Hauptsignals erfolgt dabei über Ausund Einkoppeleinrichtungen am Eingang und am Ausgang des jeweiligen Zwischenregenerators.

Voraussetzung für die zusätzliche Übertragung eines Telemetriesignals zum digitalen Signal über den gleichen Übertragungsweg ist die gegenseitige Frequenztrennung beider Signale, die dazu führt, daß das Telemetriesignal frequenzversetzt in einem vergleichsweise niedrigen Frequenzbereich übertragen wird, in dem das digitale Nutzsignal nur noch geringe Energieanteile hat. Daraus ergibt sich aber auch eine niedrige Übertragungsgeschwindigkeit für das Telemetriesignal, die die Übertragungsmöglichkeiten für Störungsmeldungen innerhalb eines Telegramms begrenzt. Eine Telegrammaufbau mit einer vergleichsweise größeren Zahl an Datenblöcken könnte zwar dieses Problem lösen, bei längeren Übertragungsstrecken würde aber die Zykluszeit, innerhalb der die Informationen über die gesamte Übertragungsstrecke vorliegen, unerträglich lang. Beim bekannten Verfahren sind deshalb nur einige Bit, beispielsweise vier Bit, für Alarmmeldungen vorgesehen. Nun ist es bekannt, daß mit den beispielsweise vier Bit auch nur vier verschiedene Alarmmeldungen pro Zwischenstelle in beliebiger Kombination übertragen werden können. Es hat sich gezeigt, daß die Fehlermöglichkeiten größer sind als die Zahl der bisher für Alarmmeldungen vorgesehenen Bit.

Die Aufgabe bei der vorliegenden Patentanmeldung besteht also darin, eine Möglichkeit zur Übertragung eine größeren Anzahl an Alarmmeldungen über die vergleichsweise wenigen Bit umfassenden Datenblöcke der Telemetrie-Tele-gramme zu finden.

Erfindungsgemäß wird die Aufgabe dadurch gelöst, daß in jeder Telemetrieeinheit durch einen zyklisch umlaufenden Schalter in einer für alle Telemetrieeinheiten einheitlichen Reihenfolge einzelne, Alarmdaten führende Anschlüsse mit einem Sammelpunkt für den auszuesendenden Datenblock verbunden und dabei alle diejenigen Anschlüsse übersprungen werden, die zum Abfragezeitpunkt keine Alarmdaten führen. Die besonderen Vorteile des erfindungsgemäßen Verfahrens liegen insbesondere darin, daß mit N Bit Übertragungsmöglichkeit im Datenblock $N^2-1$ Alarmmeldungen anstelle von N Alarmmeldungen übertragbar sind und daß das erfindungsgemäße Verfahren aufwärtskompatibel ist, d.h. das nach dem Stand der Technik ausgerüstete Streckenabschnitte und nach dem erfindungsgemäßen Verfahren ausgerüstete Streckenabschnitte beliebig in Kette geschaltet werden können. Ein weiterer Vorteil betrifft die maximale Verzögerungszeit für eine Alarmmeldung, die nur mit der Zahl der pro sendender Stelle tatsächlich aktivierten Meldungen ansteigt und nicht mit der Zahl der möglichen Alarmmeldungen.

Eine bevorzugte Weiterbildung des erfindungsgemäßen Verfahrens ist dadurch gekennzeichnet, daß der gesamte für Alarmmeldungen vorgesehene Datenblock zur Übertragung einer einzigen, den speziellen Alarm bezeichnenden Binärzahl dient. Durch diese Weiterbildung ergibt sich eine vorteilhafte Unabhängigkeit hinsichtlich der Synchronisation der einzelnen zyklisch umlaufenden Schalter in den Telemetrieeinheiten, da die Phasenlage dieser Schalter damit beliebig sein kann.

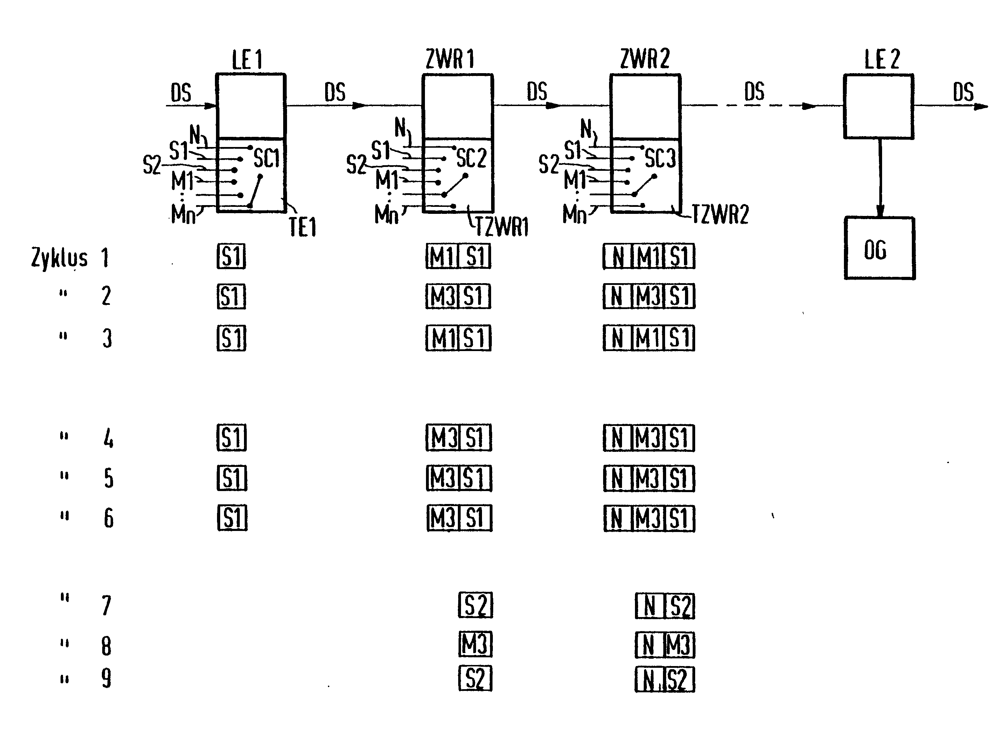

Die Erfindung soll im folgenden anhand der Zeichnung näher erläutert werden. In der Zeichnung zeigt die Figur die schematische Darstellung einer digitalen Übertragungsstrecke mit einem sendenden Leitungsendgerät LE1, zwei überwachenden Zwischenregenatoren ZWR1, ZWR2 und einem empfangenden Leitungsendgerät LE2, an das ein Ortungsgerät OG angeschlossen ist. Am sendenden Leitungsendgerät LE1 und an den beiden Zwischenregeneratoren sind jeweils die Telemetrieeinheiten TE1 bzw. TZWR1 und TZWR2 dargestellt. Von diesen Telemetrieeinheiten werden die darunter angedeuteten Telegrammketten ausgesendet und über den gleichen Übertragungsweg wie die digitalen Signale DS bis zum empfangenden Leitungsendgerät LE2 übertragen.

Die Abfrage der einzelnen, gegebenenfalls Alarmdaten führenden Anschlüsse in den Telemetrieeinheiten geschieht mit Hilfe der Abfrageschalter Sc1, Sc2, Sc3. Beim Ausführungsbeispiel sind dem eigentlichen Datenblock über die Alarmmeldungen Informationen über den Beginn der Telegrammkette vorangestellt. Bei normalen Betrieb beginnt die erste Telemetrieeinheit TE1, die im sendenden Leitungsendgerät LE1 enthalten ist mit der Aussendung eines Telegrammes.

Die Information, daß das Leitungsendgerät als "Starter" wirkt, wird als S1 im ersten Zyklus übertragen. Treten im Leitungsendgerät keine weiteren Fehler auf, wird auch in den folgenden Zyklen nur die Starterinformation S1 im Zusammenhang mit dem Zwischenregenerator ZWR1 übertragen.

Im ersten Zwischenregenerator ZWR1 sollen nun beispielsweise Alarmmeldungen M1 und M3 vorliegen. Sie werden im Anschluß an die Starterinformation S1 des sendenden Leitungsendgerätes in die Telegrammkette eingeblendet und an den zweiten Zwischenregenerator ZWR2 abgegeben. Da im angenommenen Beispiel in diesem Zwischenregenerator ZWR2 keine weiteren Fehlermeldungen vorliegen, wird von diesem in der ersten Telegrammkette S1, M1 nur die Information "N" entsprechend - keine Fehlermeldung - weiterübertragen. Nach Empfang im Ortsgerät an der auswertenden Endstelle kann aus dem eingehenden Telegramm geschlossen werden, daß die Telegrammkette im sendenden Leitungsendgerät LE1 begonnen wurde, daß im ersten Zwischenregenerator eine Fehlermeldung M1 eingefügt wurde und im zweiten Zwischenregenerator ZWR2 keine Fehlermeldungen vorliegen.

Beim zweiten Telegrammzyklus beginnt die Telegrammkette wieder mit der Starterinformation des sendenden Leitungsendgerätes, im ersten Zwischenregenerator ist der zweite Abtastschalter Sc2 zum nächsten, Alarmdaten führenden Anschluß weitergeschaltet worden und blendet in die Telegrammkette die Alarmmeldung M3 ein. Da im zweiten Zwischenregenerator ZWR2 wiederum keine Alarmmeldungen vorliegen, wird von diesem an die Telegrammkette die Meldung "N" angefügt.

Beim dritten Telegrammzyklus wirkt das sendende Leitungsendgerät LE1 wiederum als Starter und sendet die Meldung S1 aus, der zweite Abtastschalter Sc2 im ersten Zwischenregenerator ist wiederum weitergeschaltet worden und blendet die Meldung M1 in die Telegrammkette ein, vom zweiten Zwischenregenerator ZWR2 liegt weiter keine Fehlermeldung vor. In der auswertenden Endstelle ist erkennbar, daß das sendende Leitungsendgerät LE1 weiterhin als Starter wirkt und das vom ersten Zwischenregenerator ZWR1 die Fehlermeldungen M1 und M3 abgegeben werden. Zu diesem Zeitpunkt soll die Fehlermeldung M1 behoben werden, so daß in der Telemetrieeinheit TZWR1 des ersten Zwischenregenerators die Meldung M1 gelöscht wird. Beim vierten Telegrammzyklus gibt der Abtastschalter Sc2 in der Telemetrieeinheit TZWR1 des ersten Zwischenregenerators wiederum die Meldung M3 ab, so daß in der auswertenden Endstelle zunächst nur erkennbar ist, daß weiterhin die Fehlermeldung M3 vorliegt. Beim fünften Telegrammzyklus aber, bei dem der zweite Abtastschalter SC2 von M3 auf M1 weitergeschaltet haben müßte, gibt dieser ebenfalls die Meldung M3 ab. Nach Auswertung der Telegrammkette in der Endstelle ist damit erkennbar, daß nur noch die Fehlermeldung M3 vorliegt, da der Abtastschalter Sc2 offenbar den bisher die Fehlermeldung M1 führenden Anschluß übersprungen hat. Bei Ablauf des sechsten Telegrammzyklus soll, nachdem die Telemetrieeinheit ZWR1 des ersten Zwischenregenerators ihre Fehlermeldung M3 abgegeben hat, eine Streckenunterbrechung auftreten, so daß beim siebenten Telegrammzyklus die Telemetrieeinheit TZWR1 des ersten Zwischenregnerators vom Leitungsendgerät LE1 keine Daten mehr erhält und zwar weder Starterinformationen und sonstiger Alarmmeldungen. - Nach entsprechender Wartezeit beginnt die Telemetrieeinheit TZWR1 ihrerseits vorrangig zunächst mit der Aussendung ihrer Starterinformation S2, die darauf hinweist, daß nicht mehr das sendende Leitungsendgerät LE1 sondern nunmehr ein Zwischenregenerator als Starter wirkt. Da im zweiten Zwischenregenerator ZWR2 keine Fehler auftreten wird von dessen Telemetrieeinheit TZWR2 nur die Meldung N (keine Fehler) an die Starterinformation S2 angehängt. Beim achten Telegrammzyklus ist der Abtastschalter Sc2 in der Telemetrieeinheit TZWR1 des ersten Zwischengenerators zum nächsten, Alarmmeldungen führenden Anschluß weitergelaufen und gibt anstelle der Starterinformation nunmehr die Meldung M3 ab, an die im zweiten Zwischenregenerator ZWR2 wiederum "N" angehängt wird. Bis zur Behebung der Streckenunterbrechung ist nun in der Telemetrieeinheit TZWR1 des ersten Zwischenregnrators der Anschluß S2 aktiviert, der sofern keine weiteren Alarmmeldungen vorliegen, bei jedem Telegrammzyklus sonst aber im zyklischen Wechsel mit anderen Alarmmeldungen angeschaltet wird, so daß in der auswertenden Endstelle weiterhin erkennbar ist, daß der erste Zwischenregenerator ZWR1 als Starter wirkt und daß in diesem gegebenenfalls weitere Alarmmeldungen auftreten. Der gesamte Meldezyklus in dem sich beispielsweise die Meldung S2 wiederholt, hängt also von der Anzahl der in dieser Telemetrieeinheit vorliegenden Alarmmeldungen ab.

In gleicher Weise ist in der auswertenden Endstelle erkennbar, wenn nach Behebung der Strekkenunterbrechung die Starterinformation S2 des ersten Zwischenregenerators wieder verschwindet und dafür die Starterinformation S1 des sendenden Leitungsendgerätes, gegebenenfalls in zyklischem Wechsel mit weiteren Alarmmeldungen des sendenden Leitungsendgeräts, LE1 wieder auftaucht.

Das Ausführungsbeispiel läßt erkennen, daß nach dem Stande der Technik organisierte Strekkenabschnitte in denen ein Datenblock von beispielsweise vier Bit für vier bestimmte Alarmmeldungen fest vorgesehen ist, mit nach dem erfindungsgemäßen Verfahren organisierten Streckenabschnitten beliebig in Kette geschaltet werden können, da sich das Format der übertragenen Datenblöcke nicht geändert hat. Es ist weiterhin erkennbar, daß die Phasenlage der einzelnen Abtastschalter Sc1, Sc2, Sc3 voneinander beliebig unabhängig sein kann, so daß keinerlei beispielsweise nach einer Streckenunterbrechung Synchronisationsschwierigkeiten auftreten. Durch die Übertragung von bevorrechtigten Alarmdaten (vorzugsweise der Starterkennung, S1 bzw. S2) mit Priorität wird die Neusynchronisation, z.B. nach einer Streckenunterbrechung, durch die zufällige Phase der zyklischen Abfrage zeitlich nicht verzögert. Durch das erfindungsgemäße Verfahren wird auch die Überwachung einer Übertragungsstrecke erleichtert, von der keine Fehlermeldung abgegeben wurde und bei der durch absichtliche Aussendung eines Fehlers von der sendenden Endstelle LE1 über alle Zwischenregeneratoren hinweg in der Telegrammkette die gleiche Fehlermeldung auftauchen muß.

**Patentansprüche**

1. Verfahren zur Betriebsüberwachung digitaler Übertragungsstrecken (DS) mit zwischen zwei Leitungsendgeräten (LE1, LE2) angeordneten Zwischenregeneratoren (ZWR), bei dem ein Telemetriesignal über den gleichen Signalweg wie das digitale Signal übertragen wird, bei dem wenigstens einige der Zwischenregeneratoren Telemetrieeinheiten (TZWR) enthalten, in denen das übertragene Telemetriesignal regeneriert und verstärkt wird und von denen zyklisch ein aus mehreren Datenblöcken bestehendes Telegramm ausgesendet wird und bei dem die Folge der Telegramme in Form einer Telegrammkette das Telemetriesignal bildet, bei dem eine Eigenüberwachung der Zwischenregeneratoren durchgeführt wird und als Ergebnis dieser Überwachung die Datenblöcke der Telegramme Informationen über den Zustand der empfangenen digitalen Signale und die Funktion des jeweiligen Zwischenregenerators enthalten, bei dem im Ortungsgerät des empfangsseitigen Leitungsendgerätes die Zwischenregeneratoren durch Auszählen der Telemetriesignale lokalisiert werden und die verschiedenen Streckenabschnitte und Zwischenregeneratoren durch Auswerten der Datenblöcke der Telemetriesignale überwacht werden, **dadurch gekennzeichnet,** daß in jeder Telemetrieeinheit durch einen zyklisch umlaufenden Schalter (SC) in einer für alle Telemetrieeinheiten einheitlichen Reihenfolge einzelne Alarmdaten führende Anschlüsse (M) mit einem Sammelpunkt für den auszusendenden Datenblock verbunden und dabei alle diejenigen Anschlüsse übersprungen werden, die zum Abfragezeitpunkt keine Alarmdaten führen.

2. Verfahren nach Anspruch 1, **dadurch gekennzeichnet,** daß der gesamte, für Alarmmeldungen vorgesehene Datenblock zur Übertragung einer einzigen, den speziellen Alarmbezeichnenden Binärzahl dient.

3. Verfahren nach Anspruch 1 oder 2, **dadurch gekennzeichnet**, daß unabhängig von der momentanen Stellung des zyklischen Abtastschalters bestimmte Alarmmeldungen bei ihrem Auftauchen sofort mit Priorität gegenüber allen anderen übertragen werden.

4. Verfahren nach Anspruch 3, **dadurch gekennzeichnet,** daß bei der Übertragung von Alarmmeldungen mit Priorität, je nach Höhe der Priorität, die zyklische Fortschaltung des Abtastschalters für eine vorgegebene Anzahl von Zyklen unterbrochen wird.

**Claims**

1. Method for the in-service monitoring of digital transmission links (DS) having intermediate regenerators (ZWR) arranged between two line terminals (LE1, LE2), in which a telemetry signal is transmitted via the same signal path as the digital signal, in which at least some of the intermediate regenerators contain telemetry units (TZWR) in which the transmitted telemetry signal is regenerated and amplified and from which a telegram consisting of a plurality of data blocks is transmitted cyclically, and in which the sequence of telegrams in the forms of a telegram chain form the telemetry signal, in which a self-monitoring of the intermediate regenerators is carried out and as a result of this monitoring the data blocks of the telegrams contain information on the status of the received digital signals and the functioning of the respective intermediate regenerator, in which the intermediate regenerators are located by counting the telemetry signals in the locating device of the receiving-end line terminal and the various link sections and intermediate regenerators are monitored by evaluation of the data blocks of the telemetry signals, characterised in that in each telemetry unit terminals (M) carrying individual items of alarm data are connected in a uniform order for all telemetry units by means of a cyclically operating switch (SC) to a collecting point for the data block to be transmitted, during which all the terminals not carrying any alarm data at the time of interrogation are skipped.

2. Method according to Claim 1, characterised in that the entire data block provided for alarm messages serves to transmit a single binary number which designates the specific alarm.

3. Method according to Claim 1 or 2, characterised in that, irrespective of the current position of the cyclical sampling switch, certain alarm messages are transmitted immediately they occur with priority over all other messages.

4. Method according to Claim 3, characterised in that during the transmission of alarm messages with priority, depending on the level of priority, the cyclical switching forward of the sampling switch is interrupted for a given number of cycles.

**Revendications**

1. Procédé pour contrôler le fonctionnement de voies numériques de transmission (DS) comportant des régénérateurs intermédiaires (ZWR) disposés entre deux appareils terminaux de lignes (LE1,LE2), et selon lequel un signal de télémétrie est transmis par l'intermédiaire de la même voie de transmission de signaux que le signal numérique, au moins quelques-uns des régénérateurs intermédiaires comportant des unités de télémétrie (TZWR), dans lesquelles le signal de télémétrie transmis est régénéré et amplifié et qui émettent cycliquement un télégramme formé de plusieurs blocs de données, et dans lequel la suite des télégrammes constitue, sous la forme d'une chaîne de télégrammes, le signal de télémétrie, et un contrôle individuel des régénérateurs intermédiaires est exécuté et, en tant que résultat de ce contrôle, les blocs de données des télégrammes contiennent des informations concernant l'état des signaux numériques reçus et la fonction du régénérateur intermédiaire respectif, et les régénérateurs intermédiaires sont localisés dans l'appareil de localisation de l'appareil terminal de ligne côté réception, au moyen d'un décompte des signaux de télémétrie, et les différentes sections de la voie et les différents régénérateurs intermédiaires sont contrôlés moyennant une évaluation des blocs de données des signaux de télémétrie, caractérisé par le fait que, dans chaque unité de télémétrie, des bornes (M) transmettant des données individuelles d'alarme sont reliées par un commutateur à fonctionnement cyclique (SC), selon une séquence uniforme pour toutes les unités de télémétrie, à un point de rassemblement pour le bloc de données devant être émis, et toutes les bornes, qui ne transmettent aucune donnée d'alarme à l'instant d'interrogation, sont sautées.

2. Procédé suivant la revendication 1, caractérisé par le fait que la totalité du bloc de données, prévu pour des signalisations d'alarme, est utilisée pour la transmission d'un seul nombre binaire, qui désigne l'alarme particulière.

3. Procédé suivant la revendication 1 ou 2, caractérisé par le fait qu'indépendamment de la position instantanée du commutateur cyclique d'exploration, des signalisations déterminées d'alarme sont transmises immédiatement, lors de leur apparition, avec priorité par rapport à toutes les autres signalisations.

4. Procédé suivant la revendication 3, caractérisé par le fait que dans le cas du contrôle de signalisation d'alarme avec priorité, l'avance cyclique du commutateur d'exploration est interrompue, en fonction de la priorité, pendant un nombre prédéterminé de cycles.